# EUROPÄISCHE PATENTSCHRIFT

(11) **EP 0 398 103 B1**
(45) Veröffentlichungstag und Bekanntmachung des Hinweises auf die Patenterteilung: **19.10.1994**
(21) Anmeldenummer: 90108504.3
(22) Anmeldetag: 07.05.1990
(51) Int. Cl.: G01F 1/84

(54) **Massendurchflussmessgerät**
Mass-flow measuring device
Dispositif de mesure du débit masse

(30) Priorität: 19.05.1989 DE 3916285
(43) Veröffentlichungstag der Anmeldung: 22.11.1990
(73) Patentinhaber: KROHNE MESSTECHNIK MASSAMETRON GmbH & Co. KG, D-72072 Tübingen-Lusinau (DE)
(72) Erfinder: Chi, Hung Nguyen, Dr. Dipl.-Ing., D-7410 Reutlingen (DE)
(74) Vertreter: Gesthuysen, Hans Dieter, Dipl.-Ing.

(56) Entgegenhaltungen:
- EP-A- 0 210 408
- EP-A- 0 212 782
- EP-A- 0 246 510
- EP-A- 0 261 436
- EP-A- 0 262 573
- EP-A- 0 263 719
- EP-A- 0 361 388
- EP-A- 0 381 302
- WO-A-85/05677
- WO-A-88/08517
- FR-A- 2 215 607
- US-A- 4 628 744

## Beschreibung

Die Erfindung betrifft ein Massendurchflußmeßgerät für strömende Medien, das nach dem Coriolis-Prinzip arbeitet, mit einem Leitungseinlauf, mit einer das strömende Medium führenden Leitung, mit einem Leitungsauslauf, mit einem den Leitungseinlauf, die Leitung und den Leitungsauslauf haltenden Tragsystem, mit mindestens einem auf die Leitung einwirkenden Schwingungserzeuger und mit mindestens einer Corioliskräfte oder auf Corioliskräfte beruhende Coriolisschwingungen erfassenden Meßeinrichtung.

Massendurchflußmeßgeräte für strömende Medien, die nach dem Coriolis-Prinzip arbeiten, sind in verschiedenen Ausführungen bekannt (vgl. z. B. die DE-OSen 26 29 833, 28 22 087, 28 33 037, 29 38 498, 30 07 361, 33 29 544, 34 43 234, 35 03 841, 35 05 166, 35 26 297 und 37 07 777, die EP-OSen 0 083 144, 0 109 218, 0 119 638, 0 185 709, 0 196 150, 0 210 408, 0 212 782, 0 235 274, 0 239 679, 0 243 468, 0 244 692, 0 250 706, 0 271 605, 0 275 367 und 0 282 552, FR-A-2215607, WO-A-85/05677, WO-A-88/08517, sowie die US-PSen 4,491,009, 4,628,744 und 4,666,421) und finden in zunehmendem Maße in der Praxis Verwendung.

In EP-A-0246510 sind Platten (30,40,Figur 3) verwendet, um eine Leistung innerhalb eines Gehäuses zu stützen und gegen Vibrationen von außen zu isolieren.

Allen im Stand der Technik bekannten Massendurchflußmeßgeräten für strömende Medien, die nach dem Coriolis-Prinzip arbeiten, ist gemeinsam, daß sie den fertigungstechnischen, den meßtechnischen und/oder den betriebstechnischen Anforderungen noch nicht optimal genügen, so daß der Erfindung die allgemeine Aufgabe zugrunde liegt, ein insoweit verbessertes Massendurchflußmeßgerät anzugeben.

Der Erfindung liegt die Aufgabe zugrunde, das durch den Oberbegriff des Anspruchs 1 beschriebene Massendurchflußmeßgerät (siehe z.B. EP-A-0212782) so auszugestalten und weiterzubilden, daß die Verbindungsstellen hinter dem Leitungseinlauf und vor dem Leitungsauslauf nicht mehr dynamisch beansprucht werden.

Das erfindungsgemäße Massendurchflußmeßgerät ist durch die Merkmale des Anspruchs 1 definiert. Diese erfindungsgemäße Ausgestaltung eines nach dem Coriolis-Prinzip arbeitenden Massendurchflußmeßgeräts hat erhebliche fertigungstechnische, meßtechnische und betriebstechnische Vorteile.

Im folgenden wird die Erfindung und werden Ausgestaltungen und Weiterbildungen der Erfindung in Verbindung mit in der Zeichnung dargestellten Ausführungsbeispielen erläutert; es zeigen
- Fig. 1: einen Längsschnitt durch eine erste Ausführungsform eines erfindungsgemäßen Massendurchflußmeßgerätes,
- Fig. 2: einen Querschnitt durch das Massendurchflußmeßgerät nach Fig. 1,
- Fig. 3: in gegenüber den Fig. 1 und 2 vergrößerter Darstellung den Ausschnitt X aus Fig. 2,
- Fig. 4: einen Längsschnitt durch eine zweite Ausführungsform eines erfindungsgemäßen Massendurchflußmeßgerätes,
- Fig. 5: eine Seitenansicht des Massendurchflußmeßgerätes nach Fig. 4,
- Fig. 6: eine Draufsicht auf das Massendurchflußmeßgerät nach Fig. 4,
- Fig. 7: aus dem Massendurchflußmeßgerät nach Fig. 4 die das strömende Medium führende Leitung mit Leitungseinlauf und Leitungsauslauf,

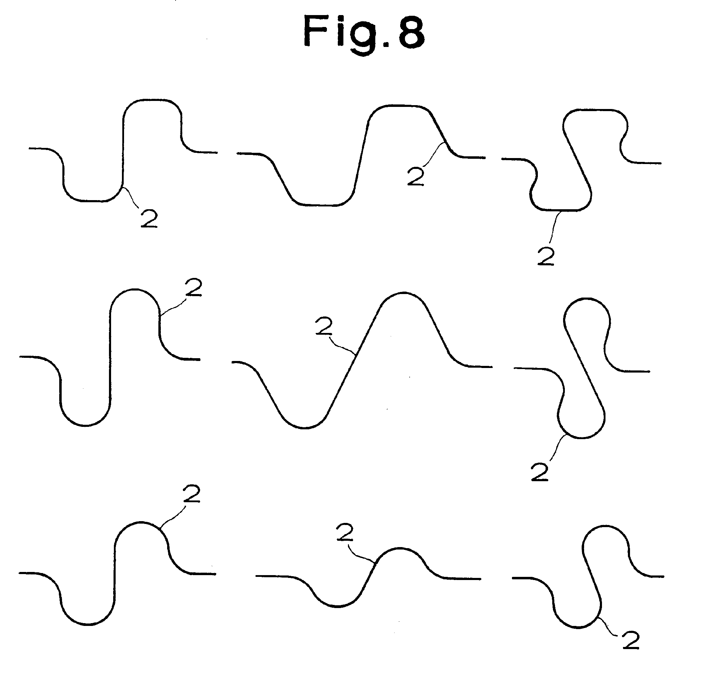

- Fig. 8: in schematischer Darstellung, grundsätzlich mögliche Konfigurationen der das strömende Medium führenden Leitung eines erfindungsgemäßen Massendurchflußmeßgerätes,
- Fig. 9: in gegenüber den Fig. 4 bis 7 vergrößerter Darstellung, eine Draufsicht auf ein bei dem Massendurchflußmeßgerät nach den Fig. 4 bis 7 verwendetes Hosenstück,
- Fig. 10: eine Seitenansicht des Hosenstücks nach Fig. 9,
- Fig. 11: einen Schnitt längs der Linie XI - XI durch das Hosenstück nach Fig. 9 und
- Fig. 12: einen Schnitt längs der Linie XII - XII durch das Hosenstück nach Fig. 9.

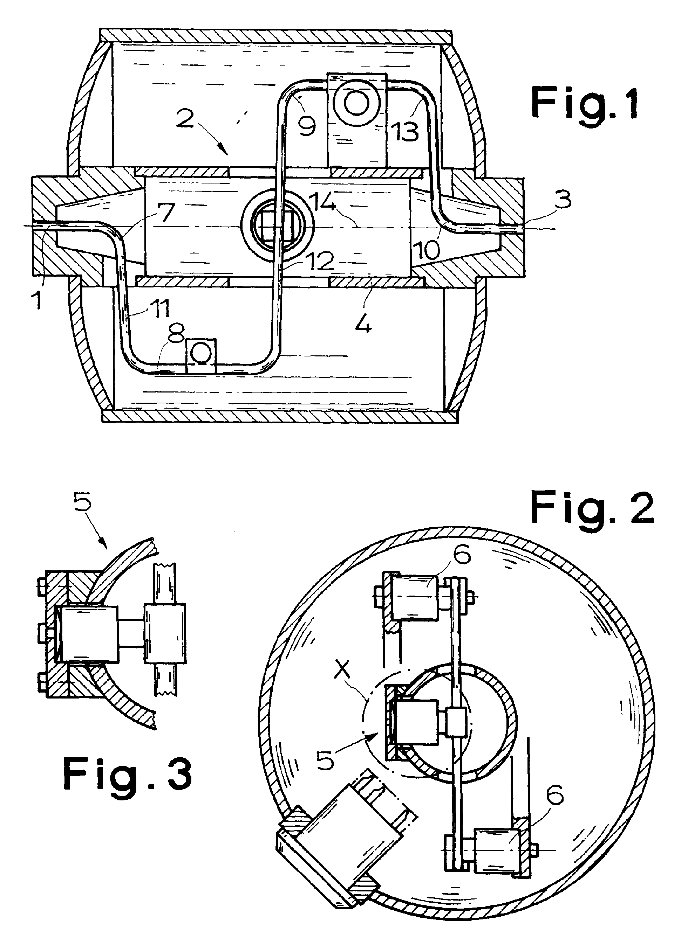

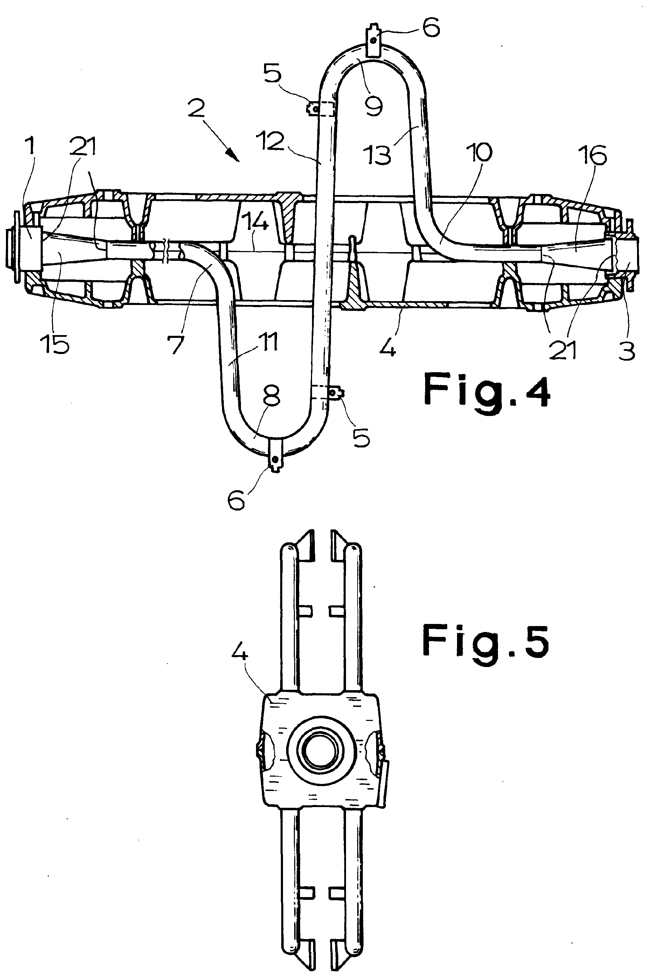

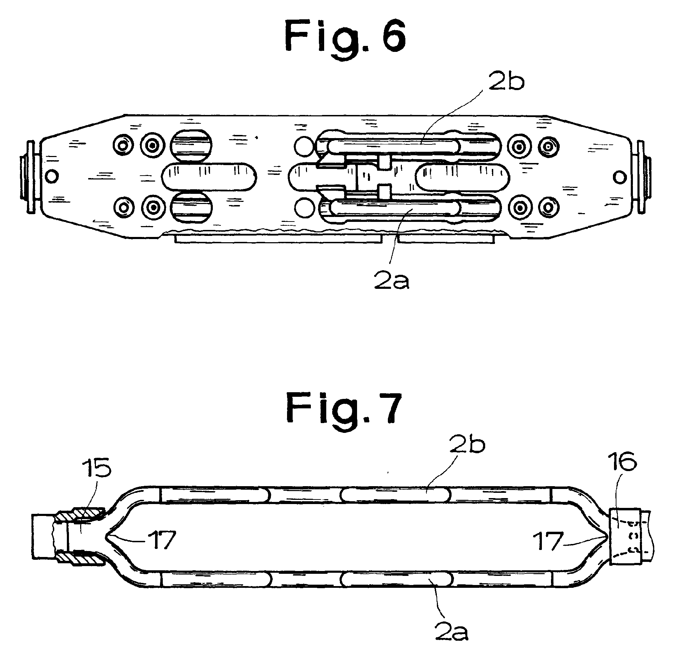

Das in den Fig. 1 bis 3 bzw. in den Fig. 4 bis 7 dargestellte Massendurchflußmeßgerät ist für strömende Medien bestimmt, arbeitet nach dem Coriolis-Prinzip und besteht in seinem wesentlichen Aufbau aus einem Leitungseinlauf 1, einer das strömende Medium führenden Leitung 2, einem Leitungsauslauf 3, einem den Leitungseinlauf 1, die Leitung 2 und den Leitungsauslauf 3 haltenden Tragsystem 4, mindestens einem auf die Leitung 2 einwirkenden Schwingungserzeuger 5 und mindestens einer Corioliskräfte oder auf Corioliskräften beruhende Coriolisschwingungen erfassenden Meßeinrichtung 6.

Wie die Fig. 1 und 4 zeigen, gilt für das erfindungsgemäße Massendurchflußmeßgerät, daß die Leitung 2 mäanderförmig ausgeführt ist und einen Einlaufbogen 7, zwei Umkehrbögen 8, 9, einen Auslaufbogen 10 und dazwischen vorgesehene Verbindungsstücke 11, 12, 13 aufweist. Dabei ist "Einlaufbogen", "Umkehrbogen" und "Auslaufbogen" funktionell zu verstehen; es handelt sich dabei also nicht zwingend um Kreisbogenstücke.

In beiden in den Fig. 1 bis 3 einerseits, den Fig. 4 bis 7 andererseits dargestellten Ausführungsbeispielen verlaufen die Verbindungsstücke 11, 12, 13 der Leitung 2 unter einem Winkel größer bzw. kleiner 90° zur Hauptachse 14.

In den Fig. 1 bis 7 sind die erfindungsgemäßen Massendurchflußmeßgeräte mit waagerecht liegender Hauptachse 14 dargestellt. Bevorzugt werden die erfindungsgemäßen Massendurchflußmeßgeräte jedoch mit senkrecht liegender Hauptachse eingebaut. Dann führt die Maßnahme, daß die Verbindungsstücke 11, 12, 13 der Leitung 2 unter einem Winkel größer bzw. kleiner 90° zur Hauptachse verlaufen, wie in den Fig. 1 und 4 dargestellt, dazu, daß sich die erfindungsgemäßen Massendurchflußmeßgeräte selbst entleeren, ein ganz wesentlicher Vorteil der dargestellten Ausführungsformen erfindungsgemäßer Massendurchflußmeßgeräte.

Zu der zuvor erläuterten Maßnahme, daß die Verbindungsstücke 11, 12, 13 der Leitung 2 unter einem Winkel größer bzw. kleiner 90° zur Hauptachse 14 verlaufen, korrespondiert, daß der Einlaufbogen 7 und der Auslaufbogen 10 einen Winkel größer 90° und die Umkehrbögen 8, 9 einen Winkel größer 180° bilden.

Für beide in den Fig. 1 bis 3 einerseits, den Fig. 4 bis 7 andererseits dargestellte Ausführungsformen von erfindungsgemäßen Massendurchflußmeßgeräten gilt, daß der Leitungseinlauf 1 und der Leitungsauslauf 3 koaxial zueinander angeordnet sind. Daraus resultiert dann, daß das erfindungsgemäße Massendurchflußmeßgerät ohne weiteres in ein geradlinig verlaufendes Leitungssystem eingebaut werden kann.

Für die meßtechnische Funktionstüchtigkeit des erfindungsgemäßen Massendurchflußmeßgerätes ist von besonderer Bedeutung, was in Fig. 1 nicht dargestellt ist, daß die Leitung an vier Stellen fest mit dem Tragsystem verbunden sein kann, nämlich am Anfang des Leitungseinlaufs, hinter dem Leitungseinlauf, vor dem Leitungsauslauf und am Ende des Leitungsauslaufs.

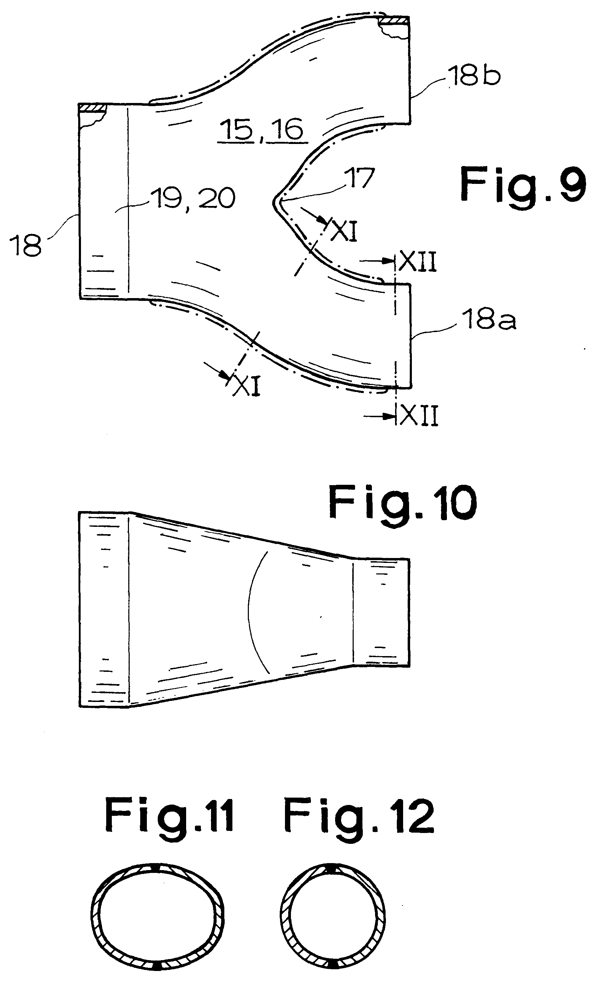

Bei der Ausführungsform des erfindungsgemäßen Massendurchflußmeßgerätes, die in den Fig. 4 bis 7 dargestellt ist, weist die Leitung 2 zwei räumlich und strömungsmäßig parallel liegende Teilleitungen 2a, 2b auf. Dabei sind die beiden Teilleitungen 2a, 2b der Leitung 2 über jeweils ein Rosenstück 15, 16 hinter dem Leitungseinlauf 2 bzw. vor dem Leitungsauslauf 3 miteinander verbunden. Wie dazu die Fig. 9 bis 12 zeigen, sind die Hosenstücke 15, 16 an der Verzweigungsstelle 17 keilförmig ausgeführt, weisen die Hosenstücke 15, 16 zwischen ihrem großen Gesamtquerschnitt 18 und den beiden kleineren Teilquerschnitten 18a, 18b stetig gekrümmte Konturen auf und sind das Hosenstück 15 eingangsseitig und das Hosenstück 16 ausgangsseitig mit jeweils einer großvolumigen Entkopplungskammer 19, 20 versehen.

Wie zuvor erläutert, gilt für die in den Fig. 4 bis 7 dargestellte Ausführungsform eines erfindungsgemäßen Massendurchflußmeßgerätes, daß die Leitung 2 zwei räumlich und strömungsmäßig parallel liegende Teilleitungen 2a, 2b aufweist. Dabei ist die Leitung 2 insgesamt an sechs Stellen fest mit dem Tragsystem 4 verbunden, nämlich am Anfang des Leitungseinlaufs 1, am Anfang jeder Teilleitung 2a, 2b, am Ende jeder Teilleitung 2a, 2b und am Ende des Leitungsauslaufs 3.

Bei der in den Fig. 1 bis 3 dargestellten Ausführungsform eines erfindungsgemäßen Massendurchflußmeßgerätes sind der Leitungseinlauf 2, die Leitung und der Leitungsauslauf 3 einstückig ausgeführt; es handelt sich um ein durchgehendes, entsprechend gebogenes Rohr. Im Gegensatz dazu gilt für die Ausführungsform des erfindungsgemäßen Massendurchflußmeßgerätes, die in den Fig. 4 bis 7 dargestellt ist, daß der Einlaufbogen 7 der Leitung 2 mit dem Leitungseinlauf 1 und der Auslaufbogen 10 der Leitung 2 mit dem Leitungsauslauf 3, genauer gesagt: die Einlaufbögen 7 der Leitung 2 mit dem Hosenstück 15, das Hosenstück 15 mit Leitungseinlauf 1, die Auslaufbögen 10 der Leitung 2 mit dem Hosenstück 16 und das Hosenstück 16 mit dem Leitungsauslauf 3 durch Schweißnähte 21 verbunden sind. Dabei ist die Leitung 2 hinter der den Einlaufbogen 7 mit dem Leitungseinlauf 11 bzw. dem Hosenstück 15 verbindenden Schweißnaht und vor der den Auslaufbogen 10 mit dem Leitungsauslauf 3 bzw. mit dem Hosenstück 16 verbindenden Schweißnaht 21 fest mit dem Tragsystem verbunden. Das hat den wesentlichen Vorteil, daß die vom Schwingungserzeuger 5 aus gesehen hinter den Einspannstellen liegenden Schweißnähte 21 vor örtlichen Spannungsüberhöhungen schützt sind.

Wie insbesondere die Fig. 1 und 4 zeigen, ist bei den dargestellten Ausführungsformen erfindungsgemäßer Massendurchflußmeßgeräte das Tragsystem 4 jeweils biege- und torsionssteif, nämlich brückenförmig, genauer: doppeltbrückenförmig ausgeführt. Das hat den wesentlichen Vorteil, daß von außen, nämlich aus dem angeschlossenen Rohrleitungssystem herrührende Kräfte über das Tragsystem - brückenförmig - und damit nicht über die Leitung 2 geleitet werden.

Bei den erfindungsgemäßen Massendurchflußmeßgeräten können die Schwingungserzeuger 5 die Leitung 2 bzw. die Teilleitungen 2a, 2b zu Torsionsschwingungen oder zu Biegeschwingungen anregen. Regt der Schwingungserzeuger 5 die Leitung 2 bzw. die Teilleitungen 2a, 2b zu Torsionsschwingungen an, so ruft die Corioliskraft Biegeschwingungen hervor; regt jedoch der Schwingungserzeuger 5 die Leitung 2 bzw. die Teilleitungen 2a, 2b zu Biegeschwingungen an, so ruft die Corioliskraft Torsionsschwingungen hervor.

Einleitend ist gesagt worden, daß zu dem erfindungsgemäßen Massendurchflußmeßgerät mindestens ein Schwingungserzeuger 5 und mindestens eine Meßeinrichtung 6 gehören. Nun können, wie dies die Fig. 1 bis 3 zeigen, genau ein Schwingungserzeuger 5, aber zwei Meßeinrichtungen 6 vorgesehen sein. Es können aber auch, wie dies für die Ausführungsform nach den Fig. 4 bis 7 gilt, zwei Schwingungserzeuger 5 und zwei Meßeinrichtungen 6 vorgesehen sein.

Bezüglich der Schwingungserzeuger 5 und der Meßeinrichtungen 6 geht eine weitere Lehre der Erfindung dahin, den Schwingungserzeuger bzw. die Schwingungserzeuger und/oder die Meßeinrichtung bzw. die Meßeinrichtungen jeweils aus einer Dauermagnetscheibe und einer durch die Dauermagnetscheibe beeinflußbaren Spule aufzubauen. Es besteht jedoch auch die Möglichkeit, den Schwingungserzeuger bzw. die Schwingungserzeuger und/oder die Meßeinrichtung bzw. die Meßeinrichtungen jeweils aus zwei an den beiden Teilleitungen vorgesehenen Dauermagnetscheiben und einer ortsfesten Spule aufzubauen. Bei dieser Ausführungsform empfiehlt es sich, zwischen zwei benachbarten Spulen eine Entkoppelscheibe aus hochpermeablem Material, insbesondere aus Mumetall vorzusehen.

Schließlich sind weitere Lehren der Erfindung, was in den Figuren nicht dargestellt ist, dadurch gekennzeichnet, daß die Eigenfrequenz des Leitungseinlaufs 1 und des Leitungsauslaufs 3 wesentlich kleiner oder wesentlich größer als die Erregerfrequenz des Schwingungserzeugers 5 bzw. der Schwingungserzeuger 5 ist, daß die Erregerfrequenz des Schwingungserzeugers 5 bzw. der Schwingungserzeuger 5 gleich ist der Eigenfrequenz der Leitung 2 bzw. der Eigenfrequenz der Teilleitungen 2a, 2b und/oder daß die Differenz des Tangens des Hasenwinkels der Meßwerte der beiden Meßeinrichtungen 6 als Maß für die durchfließende Masse und/oder die von dem strömenden Medium bestimmte Schwingungsfrequenz als Maß für die Dichte ausgewertet wird.

## Patentansprüche

1. Massendurchflußmeßgerät für strömende Medien, das nach dem Coriolis-Prinzip arbeitet, mit einem Leitungseinlauf (1), mit einer das strömende Medium führenden Leitung (2), mit einem Leitungsauslauf (3), mit einem den Leitungseinlauf (1) und den Leitungsauslauf (2) haltenden Tragsystem (4), mit mindestens einem auf die Leitung (2) einwirkenden Schwingungserzeuger (5) und mit mindestens einer Corioliskräfte oder auf Corioliskräften beruhende Coriolis-Schwingungen erfassenden Meßeinrichtung (6), wobei die Leitung (2) mäanderförmig ausgeführt ist und einen Einlaufbogen (7), zwei Umkehrbögen (8, 9), einen Auslaufbogen (10) und drei Verbindungsstücke (11, 12, 13) aufweist, wobei der Einlaufbogen (7) mit dem Leitungseinlauf (1) und der Auslaufbogen (10) mit dem Leitungsauslauf (3) durch Schweißnähte verbunden sind und wobei zwischen dem Einlaufbogen (7) und dem ersten Umkehrbogen (8) das erste Verbindungsstück (11), zwischen dem ersten Umkehrbogen (8) und dem zweiten Umkehrbogen (9) das zweite Verbindungsstück (12) sowie zwischen dem zweiten Umkehrbogen (9) und dem Auslaufbogen (10) das dritte Verbindungsstück (13) vorgesehen sind, **dadurch gekennzeichnet**, daß die Leitung (2) an mindestens vier Stellen fest mit dem Tragsystem (4) verbunden ist, nämlich am Anfang des Leitungseinlaufes (1), hinter der den Einlaufbogen (7) mit dem Leitungseinlauf (1) verbindenden Schweißnaht (21), vor der den Auslaufbogen (7) mit dem Leitungsauslauf (3) verbindenden Schweißnaht (21) und am Ende des Leitungsauslaufes (3).

2. Massendurchflußmeßgerät nach Anspruch 1, dadurch gekennzeichnet, daß die Verbindungsstücke (11, 12, 13) der Leitung (2) unter einem Winkel größer bzw. kleiner 90° zur Hauptachse (14) verlaufen.

3. Massendurchflußmeßgerät nach Anspruch 1 oder 2, dadurch gekennzeichnet, daß der Einlaufbogen (7) und der Auslaufbogen (10) einen Winkel größer 90° und die Umkehrbögen (8, 9) einen Winkel größer 180° bilden.

4. Massendurchflußmeßgerät nach einem der Ansprüche 1 bis 3, dadurch gekennzeichnet, daß der Leitungseinlauf (1) und der Leitungsauslauf (3) koaxial verlaufen und die Achse des Leitungseinlaufs (1) und des Leitungsauslaufs (3) die Hauptachse (14) darstellen

5. Massendurchflußmeßgerät nach einem der Ansprüche 1 bis 4, dadurch gekennzeichnet, daß die Leitung (2) zwei räumlich und strömungsmäßig parallel liegende Teilleitungen (2a, 2b) aufweist.

6. Massendurchflußmeßgerät nach Anspruch 5, dadurch gekennzeichnet, daß die beiden Teilleitungen (2a, 2b) der Leitung (2) über jeweils ein Hosenstück (15, 16) hinter dem Leitungseinlauf (2) bzw. vor dem Leitungsauslauf (3) miteinander verbunden sind.

7. Massendurchflußmeßgerät nach Anspruch 6, dadurch gekennzeichnet, daß die Hosenstücke (15, 16) an der Verzweigungsstelle (17) keilförmig ausgeführt sind.

8. Massendurchflußmeßgerät nach Anspruch 6 oder 7, dadurch gekennzeichnet, daß die Hosenstücke (15, 16) zwischen ihrem großen Gesamtquerschnitt (18) und den beiden kleineren Teilquerschnitten (18a, 18b) stetig gekrümmte Konturen aufweisen.

9. Massendurchflußmeßgerät nach einem der Ansprüche 6 bis 8, dadurch gekennzeichnet, daß die Hosenstücke (15, 16) eingangsseitig bzw. ausgangsseitig mit jeweils einer großvolumigen Entkopplungskammer (19, 20) versehen sind.

10. Massendurchflußmeßgerät nach einem der Ansprüche 5 bis 9, dadurch gekennzeichnet, daß die Leitung (2) an sechs Stellen fest mit dem Tragsystem (4) verbunden ist, nämlich am Anfang des Leitungseinlaufs (1), am Anfang jeder Teilleitung (2a, 2b), am Ende jeder Teilleitung (2a, 2b) und am Ende des Leitungsauslaufs (3).

11. Massendurchflußmeßgerät nach einem der Ansprüche 1 bis 10, dadurch gekennzeichnet, daß das Tragsystem (4) biege- und torsionssteif ausgeführt ist.

12. Massendurchflußmeßgerät nach Anspruch 11, dadurch gekennzeichnet, daß das Tragsystem (4) brückenförmig, vorzugsweise doppelt-brückenförmig ausgeführt ist.

13. Massendurchflußmeßgerät nach einem der Ansprüche 1 bis 12, dadurch gekennzeichnet, daß der Schwingungserzeuger (5) die Leitung (2) bzw. die Teilleitungen (2a, 2b) zu Torsionsschwingungen anregt.

14. Massendurchflußmeßgerät nach einem der Ansprüche 1 bis 12, dadurch gekennzeichnet, daß der Schwingungserzeuger (5) die Leitung (2) bzw. die Teilleitungen (2a, 2b) zu Biegeschwingungen anregt.

15. Massendurchflußmeßgerät nach einem der Ansprüche 1 bis 14, dadurch gekennzeichnet, daß genau ein Schwingungserzeuger (5) und zwei Meßeinrichtungen (6) vorgesehen sind.

16. Massendurchflußmeßgerät nach einem der Ansprüche 1 bis 14, dadurch gekennzeichnet, daß zwei Schwingungserzeuger (5) und zwei Meßeinrichtungen (6) vorgesehen sind.

17. Massendurchflußmeßgerät nach einem der Ansprüche 1 bis 16, dadurch gekennzeichnet, daß der Schwingungserzeuger bzw. die Schwingungserzeuger und/ oder die Meßeinrichtung bzw. die Meßeinrichtungen jeweils aus einer Dauermagnetscheibe und einer durch die Dauermagnetscheibe beeinflußbaren Spule besteht bzw. bestehen.

18. Massendurchflußmeßgerät nach einem der Ansprüche 5 bis 16, dadurch gekennzeichnet, daß der Schwingungserzeuger bzw. die Schwingungserzeuger und/ oder die Meßeinrichtung bzw. die Meßeinrichtungen jeweils aus zwei an den beiden Teilleitungen vorgesehenen Dauermagnetscheiben und einer ortsfesten Spule besteht bzw. bestehen.

19. Massendurchflußmeßgerät nach Anspruch 18, dadurch gekennzeichnet, daß zwischen zwei benachbarten Spulen eine Entkoppelscheibe aus hochpermeablem Material, insbesondere aus Mumetall vorgesehen ist.

20. Massendurchflußmeßgerät nach einem der Ansprüche 1 bis 19, dadurch gekennzeichnet, daß die Eigenfrequenz des Leitungseinlaufs (1) und des Leitungsauslaufs (3) wesentlich kleiner oder wesentlich größer als die Erregerfrequenz des Schwingungserzeugers (5) bzw. der Schwingungserzeuger (5) ist.

21. Massendurchflußmeßgerät nach einem der Ansprüche 1 bis 20, dadurch gekennzeichnet, daß die Erregerfrequenz des Schwingungserzeugers (5) bzw. der Schwingungserzeuger (5) gleich ist der Eigenfrequenz der Leitung (2) bzw. der Eigenfrequenz der Teilleitungen (2a, 2b).

22. Massendurchflußmeßgerät nach einem der Ansprüche 15 bis 21, dadurch gekennzeichnet, daß die Differenz des Tangens des Phasenwinkels der Meßwerte der beiden Meßeinrichtungen (6) als Maß für die durchfließende Masse und/ oder die von dem strömenden Medium bestimmte Schwingungsfrequenz als Maß für die Dichte ausgewertet wird.

## Claims

1. A mass flow measuring device for flowing media which operates according to the Coriolis principle, with a line inlet (1), with a line (2) conveying the flowing medium, with a line outlet (3), with a support system (4) holding the line inlet (1) and the line outlet (2), with at least one vibration generator (5) acting on the line (2) and with at least one measuring device (6) recording Coriolis forces or Coriolis vibrations based on Coriolis forces, wherein the line (2) is of meander-shaped construction and comprises an inlet bend (7), two deflection bends (8, 9), an outlet bend (10) and three connection pieces (11, 12, 13), wherein the inlet bend (7) is joined to the line inlet (1) and the outlet bend (10) is joined to the line outlet (3) by means of weld seams, and wherein the first connection piece (11) is provided between the inlet bend (7) and the first deflection bend (8), the second connection piece (12) is provided between the first deflection bend (8) and the second deflection bend (9), and the third connection piece (13) is provided between the second deflection bend (9) and the outlet bend (10), characterised in that the line (2) is rigidly attached to the support system (4) at at least four points, namely at the start of the line inlet (1), behind the weld seam (21) joining the inlet bend (7) to the line inlet (1), in front of the weld seam (21) joining the outlet bend (7) to the line outlet (3), and at the end of the line outlet (3).

2. A mass flow measuring device according to claim 1, characterised in that the connection pieces (11, 12, 13) of the line (2) run at an angle greater than or less than 90° to the major axis (14).

3. A mass flow measuring device according to claim 1 or 2, characterised in that the inlet bend (7) and the outlet bend (10) form an angle greater than 90° and the deflection bends (8, 9) form an angle greater than 180°.

4. A mass flow measuring device according to any one of claims 1 to 3, characterised in that the line inlet (1) and the line outlet (3) run coaxially and the axis of the line inlet (1) and the line outlet (3) constitutes the major axis (14).

5. A mass flow measuring device according to any one of claims 1 to 4, characterised in that the line (2) comprises two partial lines (2a, 2b) which are parallel both spatially and with regard to flow.

6. A mass flow measuring device according to claim 5, characterised in that the two partial lines (2a, 2b) of the line (2) are connected to each other behind the line inlet (2) and in front of the line outlet (3) respectively via a bifurcated piece (15, 16) in each case.

7. A mass flow measuring device according to claim 6, characterised in that the bifurcated pieces (15, 16) are of wedge-shaped construction at the branching point (17).

8. A mass flow measuring device according to claim 6 or 7, characterised in that the bifurcated pieces (15, 16) have continuously curved contours between their large overall cross-section (18) and the two smaller partial cross-sections (18a, 18b).

9. A mass flow measuring device according to any one of claims 6 to 8, characterised in that the bifurcated pieces (15, 16) are provided on the inlet side and on the outlet side respectively with a decoupling chamber (19, 20) of large volume in each case.

10. A mass flow measuring device according to any one of claims 5 to 9, characterised in that the line (2) is rigidly attached to the support system (4) at six points, namely at the start of the line inlet (1), at the start of each partial line (2a, 2b), at the end of each partial line (2a, 2b) and at the end of the line outlet (3).

11. A mass flow measuring device according to any one of claims 1 to 10, characterised in that the support system (4) is of flexurally- and torsionally-resistant construction.

12. A mass flow measuring device according to claim 11, characterised in that the support system (4) is constructed in the shape of a bridge, preferably in the shape of a double bridge.

13. A mass flow measuring device according to any one of claims 1 to 12, characterised in that the vibration generator (5) excites the line (2) or the partial lines (2a, 2b) to execute torsional vibrations.

14. A mass flow measuring device according to any one of claims 1 to 12, characterised in that the vibration generator (5) excites the line (2) or the partial lines (2a, 2b) to execute bending vibrations.

15. A mass flow measuring device according to any one of claims 1 to 14, characterised in that just one vibration generator (5) and two measuring devices (6) are provided.

16. A mass flow measuring device according to any one of claims 1 to 14, characterised in that two vibration generators (5) and two measuring devices (6) are provided.

17. A mass flow measuring device according to any one of claims 1 to 16, characterised in that the vibration generator or vibration generators and/or the measuring device or measuring devices consist in each case of a permanent magnetic plate and a coil influenceable by the permanent magnetic plate.

18. A mass flow measuring device according to any one of claims 5 to 16, characterised in that the vibration generator or vibration generators and/or the measuring device or measuring devices consist in each case of two permanent magnetic plates provided on the two partial lines, and of a fixed coil.

19. A mass flow measuring device according to claim 18, characterised in that a decoupling plate made of high-permeability material, particularly of mu-metal, is provided between two adjacent coils.

20. A mass flow measuring device according to any one of claims 1 to 19, characterised in that the resonant frequency of the line inlet (1) and the line outlet (3) is substantially less than or substantially greater than the excitation frequency of the vibration generator (5) or vibration generators (5).

21. A mass flow measuring device according to any one of claims 1 to 20, characterised in that the excitation frequency of the vibration generator (5) or vibration generators (5) is the same as the resonant frequency of the line (2) or the resonant frequency of the partial lines (2a, 2b).

22. A mass flow measuring device according to any one of claims 15 to 21, characterised in that the difference between the tangents of the phase angles of the measured values of the two measuring devices (6) is evaluated as a measure of the flowing mass and/or the vibrational frequency due to the flowing medium is evaluated as a measure of the density.

## Revendications

1. Appareil de mesure du débit masse pour des milieux qui s'écoulent, qui travaille d'après le principe de Coriolis, comprenant une entrée de conduit (1), un conduit (2) guidant le milieu qui s'écoule, une sortie de conduit (3), un système de support (4) portant l'entrée de conduit (1), le conduit (2) et la sortie de conduit (3), au moins un générateur d'oscillations ou de vibrations (5) agissant sur le conduit (2) et au moins un mécanisme de mesure (6) enregistrant les forces de Coriolis ou les oscillations de Coriolis se basant sur les forces de Coriolis, le conduit (2) étant réalisé en formant des méandres et présentant un coude d'entrée (7), deux coudes de déviation (8, 9), un coude de sortie (10) et trois éléments de liaison (11, 12, 13), le coude d'entrée (7) étant relié par des cordons de soudure à l'entrée de conduit (1) et le coude de sortie (10) étant relié à la sortie de conduit (3) par des cordons de soudure, le premier élément de liaison (1) étant prévu entre le coude d'entrée (7) et le premier coude de déviation (8), le deuxième élément de liaison (12) étant prévu entre le premier coude de déviation (8) et le deuxième coude de déviation (9), et le troisième élément de liaison (13) étant prévu entre le deuxième coude de déviation (9) et le coude de sortie (10), caractérisé en ce que le conduit (2) est relié à demeure au système de support (4) à au moins quatre endroits, notamment au début de l'entrée de conduit (1), derrière le cordon de soudure (21) reliant le coude d'entrée (7) à l'entrée de conduit (1), devant le cordon de soudure (21) reliant le coude de sortie (7) à la sortie de conduit (3), et à la fin de la sortie de conduit (3).

2. Appareil de mesure du débit masse selon la revendication 1, caractérisé en ce que les éléments de liaison (11, 12, 13) du conduit (2) s'étendent en formant un angle supérieur ou inférieur à 90° par rapport à l'axe principal (14).

3. Appareil de mesure du débit masse selon la revendication 1 ou 2, caractérisé en ce que le coude d'entrée (7) et le coude de sortie (10) forment un angle supérieur à 90° et les coudes de déviation (8, 9) forment un angle supérieur à 180°.

4. Appareil de mesure du débit masse selon l'une quelconque des revendications 1 à 3, caractérisé en ce que l'entrée de conduit (1) et la sortie de conduit (3) s'étendent en position coaxiale, et l'axe de l'entrée de conduit (1) et de la sortie de conduit (3) représente l'axe principal (14).

5. Appareil de mesure du débit masse selon les revendications 1 à 4, caractérisé en ce que le conduit (2) présente deux conduits partiels (2a, 2b) disposés en parallèle du point de vue spatial et du point de vue de l'écoulement.

6. Appareil de mesure du débit masse selon la revendication 5, caractérisé en ce que les deux conduits partiels (2a, 2b) du conduit (2) sont reliés l'un à l'autre chaque fois à l'intervention d'un élément de tuyau flexible (15, 16) derrière l'entrée de conduit (2), respectivement devant la sortie de conduit (3).

7. Appareil de mesure du débit masse selon la revendication 6, caractérisé en ce que les éléments de tuyaux flexibles (15, 16) sont réalisés en une forme conique à l'endroit de ramification (17).

8. Appareil de mesure du débit masse selon la revendication 6 ou 7, caractérisé en ce que les éléments de tuyaux flexibles (15, 16) présentent des contours à courbure constante entre leur grande section transversale totale (18) et les deux sections transversales partielles plus petites (18a, 18b).

9. Appareil de mesure du débit masse selon l'une quelconque des revendications 6 à 8, caractérisé en ce que les éléments de tuyaux flexibles (15, 16) sont munis, côté entrée, respectivement côté sortie, chaque fois d'une chambre de découplage (19, 20) à grand volume.

10. Appareil de mesure du débit masse selon l'une quelconque des revendications 5 à 9, caractérisé en ce que le conduit (2) est relié à demeure au système de support (4) à six endroits, notamment au début de l'entrée de conduit (1), au début de chaque conduit partiel (2a, 2b), à la fin de chaque conduit partiel (2a, 2b) et à la fin de la sortie de conduit (3).

11. Appareil de mesure du débit masse selon l'une quelconque des revendications 1 à 10, caractérisé en ce que le système de support (4) est réalisé pour résister au fléchissement et à la torsion.

12. Appareil de mesure du débit masse selon la revendication 11, caractérisé en ce que le système de support (4) est réalisé en forme de pont, de préférence en forme de double pont.

13. Appareil de mesure du débit masse selon l'une quelconque des revendications 1 à 12, caractérisé en ce que le générateur d'oscillations ou de vibrations (5) amène le conduit (2), respectivement les conduits partiels (2a, 2b), à des oscillations de torsion.

14. Appareil de mesure du débit masse selon l'une quelconque des revendications 1 à 12, caractérisé en ce que le générateur d'oscillations ou de vibrations (5) amène le conduit (2), respectivement les conduits partiels (2a, 2b), à des vibrations de flexion.

15. Appareil de mesure du débit masse selon l'une quelconque des revendications 1 à 14, caractérisé en ce qu'on prévoit exactement un générateur d'oscillations ou de vibrations (5) et deux mécanismes de mesure (6).

16. Appareil de mesure du débit masse selon l'une quelconque des revendications 1 à 14, caractérisé en ce qu'on prévoit deux générateurs d'oscillations ou de vibrations (5) et deux mécanismes de mesure (6).

17. Appareil de mesure du débit masse selon l'une quelconque des revendications 1 à 16, caractérisé en ce que le générateur d'oscillations ou de vibrations, respectivement les générateurs d'oscillations ou de vibrations et/ou le mécanisme de mesure, respectivement les mécanismes de mesure, est ou sont constitué(s) chacun par un disque à aimant permanent et par une bobine qui peut être influencée par le disque à aimant permanent.

18. Appareil de mesure du débit masse selon l'une quelconque des revendications 5 à 16, caractérisé en ce que le générateur d'oscillations ou de vibrations, respectivement les générateurs d'oscillations ou de vibrations et/ou le mécanisme de mesure, respectivement les mécanismes de mesure, est ou sont constitué(s) chacun par deux disques à aimants permanents prévus sur les deux conduits partiels et par une bobine stationnaire.

19. Appareil de mesure du débit masse selon la revendication 18, caractérisé en ce qu'on prévoit, entre deux bobines voisines, un disque de découplage en métal très perméable, en particulier en mumétal.

20. Appareil de mesure du débit masse selon l'une quelconque des revendications 1 à 19, caractérisé en ce que la fréquence propre de l'entrée de conduit (1) et de la sortie de conduit (3) est essentiellement inférieure ou essentiellement supérieure à la fréquence d'excitation du générateur d'oscillations ou de vibrations (5), respectivement des générateurs d'oscillations ou de vibrations (5).

21. Appareil de mesure du débit masse selon l'une quelconque des revendications 1 à 20, caractérisé en ce que la fréquence d'excitation du générateur d'oscillations ou de vibrations (5), respectivement des générateurs d'oscillations ou de vibrations (5), est égale à la fréquence propre du conduit (2), respectivement à la fréquence propre des conduits partiels (2a, 2b).

22. Appareil de mesure du débit masse selon l'une quelconque des revendications 15 à 21, caractérisé en ce que la différence de la tangente de l'angle de phase des valeurs de mesure des deux mécanismes de mesure (6) est évaluée comme mesure pour la masse en circulation, et/ou la fréquence d'oscillation ou de vibration déterminée du milieu s'écoulant est évaluée comme mesure pour la densité.
